# EUROPÄISCHE PATENTANMELDUNG

(11) **EP 3 995 265 A1**
(43) Veröffentlichungstag der Anmeldung: **11.05.2022**
(21) Anmeldenummer: 21207326.6
(22) Anmeldetag: 09.11.2021
(51) Int. Cl.: B25J 9/16

(54) **VERFAHREN UND STEUERUNGSVORRICHTUNG ZUM STEUERN EINER BEWEGUNG EINES MEHRACHSIGEN ROBOTERS**

(30) Priorität: 10.11.2020 LU 102199
(71) Anmelder: Nabtesco Precision Europe GmbH, 40472 Düsseldorf (DE)
(72) Erfinder: Obladen, Daniel, 46397 Bocholt (DE)
(74) Vertreter: Hoffmann, Jürgen

(57) **Zusammenfassung**

Die Erfindung betrifft ein Verfahren zum Steuern einer Bewegung eines mehrachsigen Roboters, der mehrere Getriebe aufweist. Das Verfahren zeichnet sich dadurch aus, dass wenigstens eine Zuordnung zwischen wenigstens zwei Mengen von Getriebegrößen wenigstens eines der Getriebe berücksichtigt wird.

## Beschreibung

Die Erfindung betrifft ein Verfahren zum Steuern einer Bewegung eines mehrachsigen Roboters, der mehrere Getriebe aufweist.

Die Erfindung betrifft außerdem eine Steuerungsvorrichtung zum Steuern einer Bewegung eines mehrachsigen Roboters sowie einen Roboter mit einer solchen Steuerungsvorrichtung.

Bei der Programmierung einer Sollbewegungsbahn eines Roboters wird, beispielsweise anhand der Vorgabe von dreidimensionalen Zwischenpunkten, oftmals so vorgegangen, dass zunächst die Programmierung einer ersten Vorgabe erfolgt, die anschließend auf der Basis eines Vergleichs der Istbewegungsbahn mit der Sollbewegungsbahn verbessert wird. Die Istbewegungsbahn des Roboters kann beispielsweise mit einem Laserscanner erfasst werden, um diese anschließend mit der Sollbewegungsbahn vergleichen zu können. Sollte sich herausstellen, dass eine zu große Abweichung vorliegt, wird die Programmierung, oftmals in einem iterativen Prozess, solange geändert, bis die Istbewegungsbahn einigermaßen der Sollbewegungsbahn entspricht. Allerdings ist diese Vorgehensweise nachteiliger Weise sehr aufwändig.

Aus US 20170165834 A1 ist ein Verfahren zum Kalibrieren eines Roboters und ein Roboter bekannt. Bei dem Verfahren wird ein Wert für einen Drehmomentverlust für das Kalibrieren ermittelt. Das Verfahren beinhaltet, den Wert für den Drehmomentverlust durch Ausführen der folgenden Schritte zu abzuschätzen: (i) Abschätzen der Trägheit des Abschnitts des Arms distal eines Gelenks für eine Bewegung um das Gelenk; (ii) Anlegen einer bestimmten Antriebsleistung an einen Motor; (iii) Empfangen von Positionsdaten von einem Positionssensor, die die Bewegung des Arms als Reaktion auf die angelegte Antriebsleistung anzeigen; und (iv) Abschätzen des Drehmomentverlustes im Getriebe unter Berücksichtigung der geschätzten Trägheit, der ermittelten Antriebsleistung und den Positionsdaten.

Aus US 2017 0108848 A1 ist ein Verfahren zum Kompensieren von Roboterbewegungsabweichungen, die durch ein Getriebe verursacht werden, bekannt. Das Verfahren umfasst, die die Temperatur des Getriebes zu ermitteln und bei der Steuerung zu berücksichtigen.

Es ist daher die Aufgabe der vorliegenden Erfindung, ein Verfahren zum Steuern einer Bewegung eines mehrachsigen Roboters, der mehrere Getriebe aufweist, anzugeben, das es ermöglicht, eine hohe Positioniergenauigkeit und eine hohe Wiederholgenauigkeit zu erreichen.

Die Aufgabe wird durch ein Verfahren gelöst, das dadurch gekennzeichnet, dass wenigstens eine Zuordnung zwischen wenigstens zwei Mengen von Getriebegrößen wenigstens eines der Getriebe berücksichtigt wird.

Es ist eine weitere Aufgabe der vorliegenden Erfindung, eine Steuerungsvorrichtung zum Steuern einer Bewegung eines mehrachsigen Roboters, der mehrere Getriebe aufweist, anzugeben, die es ermöglicht, eine hohe Positioniergenauigkeit und eine hohe Wiederholgenauigkeit zu erreichen.

Die weitere Aufgabe wird durch eine Steuerungsvorrichtung gelöst, die beim Steuern einer Bewegung des Roboters wenigstens eine Zuordnung zwischen wenigstens zwei Mengen von Getriebegrößen wenigstens eines der Getriebe berücksichtigt.

In erfindungsgemäßer Weise wurde zunächst erkannt, dass Positionierungsungenauigkeiten und Wiederholungenauigkeiten zumeist auf Ungenauigkeiten der in einem Roboter verwendeten Getriebe zurückzuführen sind. Bei der oben geschilderten, bekannten Vorgehensweise zur Programmierung eines Roboters bleibt das Verhalten der Einzelkomponenten des Roboters vollkommen unberücksichtigt. Vielmehr wird lediglich eine Überprüfung des Gesamtverhaltens aller Komponenten des Roboters vorgenommen und falls nötig korrigiert.

Im Gegensatz zur der bekannten Vorgehensweise, einen Soll-Ist-Vergleich der Istbewegungsbahn mit der Sollbewegungsbahn eines Roboters durchzuführen, basiert die vorliegende Erfindung vielmehr auf dem Erfindungsgedanken, die relevanten Eigenschaften wenigstens eines Getriebes, vorzugsweise aller Getriebe, individuell in Form wenigsten einer Zuordnung zwischen wenigstens zwei Mengen von Getriebegrößen zu berücksichtigen. Auf diese Weise ist es beispielsweise möglich, eine Sollbewegungsbahn zu programmieren, die mit großer Positioniergenauigkeit und großer Wiederholgenauigkeit von dem Roboter abgefahren werden kann, ohne dass es notwendig ist, die Istbewegungsbahn aufwändig zu vermessen und Korrekturen auf der Basis eines Soll-Ist-Vergleichs vornehmen zu müssen. Es hat sich gezeigt, dass die Verwendung einzelner konstanter Korrekturwerte - im Gegensatz zur Berücksichtigung wenigstens einer Zuordnung zwischen wenigstens zwei Mengen von Getriebegrößen - (insbesondere für sich alleine) in aller Regel nicht ausreichend ist, um eine signifikante Verbesserung der Positioniergenauigkeit und/oder der Wiederholgenauigkeit zu erreichen. Dies liegt insbesondere daran, dass einzelne konstante Korrekturwerte nicht geeignet sind, das komplexe Verhalten von Getriebegrößen eines Getriebes in allen Anwendungssituationen und Lastsituationen zu beschreiben. Insoweit unterscheiden sich die Getriebegrößen innerhalb einer zu der Zuordnung gehörenden Menge vorzugsweise voneinander. Es hat sich außerdem gezeigt, dass die meisten für eine Berücksichtigung relevanten Zuordnungen kein lineares Verhalten aufweisen. Insoweit ist die Berücksichtigung einer Zuordnung, die kein lineares Verhalten aufweist, besonders vorteilhaft. Allerdings ist die Berücksichtigung solcher Zuordnungen nicht grundsätzlich ausgeschlossen.

Die Erfindung hat darüber hinaus den ganz besonderen Vorteil, dass Änderungen der Last- und/oder Umgebungstemperatur, die Einfluss auf die Positioniergenauigkeit und/oder die Wiederholgenauigkeit haben, schnell und zuverlässig, insbesondere auch automatisch, berücksichtigt werden können.

Wie bereits erwähnt, wird vorzugsweise jeweils wenigstens eine Zuordnung zwischen wenigstens zwei Mengen von Getriebegrößen jedes der Getriebe berücksichtigt. Auf diese Weise wird vorteilhaft erreicht, dass die spezifischen Eigenschaften, insbesondere die spezifischen Eigenschaften für den individuell vorliegenden Fall von Belastung und Umgebungsparametern, aller Getriebe, die an einer Bewegung eines Roboters beteiligt sind, berücksichtigt werden. Auf diese Weise werden eine besonders große Positioniergenauigkeit und eine besonders große Wiederholgenauigkeit erreicht.

Nachfolgend sind vorteilhafte Beispiele von erfindungsgemäß zu berücksichtigenden Zuordnungen genannt. Ganz besonders vorteilhaft ist es, wenn gleichzeitig mehrere dieser Zuordnungen betreffend wenigstens ein Getriebe beim Steuern eines Roboters berücksichtigt werden. Vorzugsweise werden jeweils mehrere dieser Zuordnungen in Bezug auf jedes der an einer Bewegung des Roboters beteiligen Getriebe berücksichtigt. Die nachfolgend genannten Zuordnungen können insbesondere bei der Ansteuerung eines Antriebsmotors eines Rotationsgelenks oder eines Translationsgelenks eines Roboters berücksichtigt werden, bei dem der Antriebsmotor das Getriebe des Rotationsgelenks bzw. des Translationsgelenks antreibt.

Bei einer besonderen Ausführung betrifft die zu berücksichtigende Zuordnung den Verlauf eines Übertragungsfehlers des Getriebes in Abhängigkeit von einem Eingangswinkel eines Getriebeantriebsbauteils, beispielsweise in Abhängigkeit von einem Eingangswinkel einer Getriebeeingangswelle. Die Berücksichtigung dieser Zuordnung wirkt sich ganz besonders vorteilhaft auf die Positioniergenauigkeit und die Wiederholgenauigkeit aus.

Alternativ oder zusätzlich kann vorteilhaft vorgesehen sein, dass die Zuordnung den Verlauf einer Relativstellung eines Getriebeantriebsbauteils zu einem Getriebeabtriebsbauteil in Abhängigkeit von einer Getriebebelastung betrifft. Auf diese Weise wird vorteilhaft die Getriebesteifigkeit berücksichtigt. Die Berücksichtigung dieser Zuordnung wirkt sich ganz besonders vorteilhaft auf die Positioniergenauigkeit und die Wiederholgenauigkeit aus, da insbesondere vermieden wird, dass unterschiedliche Lastzustände zu unterschiedlichen Einstellergebnissen des Getriebes und damit zu unterschiedlichen Istbewegungsbahnen des Roboters führen.

Alternativ oder zusätzlich kann vorteilhaft vorgesehen sein, dass die Zuordnung den Getriebewirkungsgrad in Abhängigkeit von einem Drehmoment, insbesondere einem Antriebsdrehmoment oder einem Abtriebsdrehmoment, und/oder in Abhängigkeit von einer Drehzahl, insbesondere einer Antriebsdrehzahl oder einer Abtriebsdrehzahl, betrifft.

Die Berücksichtigung dieser Zuordnung wirkt sich ganz besonders vorteilhaft auf die Positioniergenauigkeit und die Wiederholgenauigkeit aus, da die innere Reibung des Getriebes beim Steuern des Roboters kompensiert wird. Die innere Reibung des Getriebes spiegelt sich insbesondere in dem Wirkungsgrad wieder, der ganz wesentlich von der jeweiligen Getriebedrehzahl und von dem wirkenden Drehmoment abhängig ist. Die Steuerungsvorrichtung kann die Zuordnung beispielsweise beim Anfahren eines Zielpunktes in der Weise berücksichtigen, dass der Antriebsmotor etwas länger aktiv bleibt um zu kompensieren, dass das Getriebe aufgrund einer hohen inneren Reibung bei der relevanten Drehzahl und dem relevanten Drehmoment bereits zum Stillstand kommen würde, bevor der Zielpunkt erreicht wird. Umgekehrt kann die Steuerungsvorrichtung die Zuordnung beispielsweise beim Anfahren eines Zielpunktes auch in der Weise berücksichtigen, dass der Antriebsmotor etwas kürzer aktiv bleibt um zu kompensieren, dass das Getriebe aufgrund einer bei der relevanten Drehzahl und dem relevanten Drehmoment geringeren inneren Reibung erst zum Stillstand kommen würde, nachdem der Zielpunkt erreicht wurde.

Bei einer ganz besonders präzisen Ausführung betrifft die Zuordnung den Getriebewirkungsgrad in Abhängigkeit von einem Drehmoment, insbesondere einem Antriebsdrehmoment oder einem Abtriebsdrehmoment, und einer Drehzahl, insbesondere einer Antriebsdrehzahl oder einer Abtriebsdrehzahl.

Alternativ oder zusätzlich kann vorteilhaft vorgesehen sein, dass die Zuordnung den Getriebewirkungsgrad in Abhängigkeit von einer Getriebetemperatur betrifft. Die Berücksichtigung dieser Zuordnung wirkt sich ganz besonders vorteilhaft auf die Positioniergenauigkeit und die Wiederholgenauigkeit aus, da die innere Reibung des Getriebes temperaturabhängig ist.

Alternativ oder zusätzlich kann vorteilhaft vorgesehen sein, dass die Zuordnung ein Getriebespiel in Abhängigkeit von einem Getriebealter oder einer Getriebebetriebszeit oder einer Getriebelaufleistung betrifft. Die Berücksichtigung dieser Zuordnung wirkt sich ganz besonders vorteilhaft auf die Positioniergenauigkeit und die Wiederholgenauigkeit aus, da der Getriebeverschließ beim Steuern des Roboters kompensiert wird.

Alternativ oder zusätzlich kann vorteilhaft vorgesehen sein, dass die Zuordnung den Verlauf eines Übertragungsfehlers in Abhängigkeit von einem Eingangswinkel eines Getriebeantriebsbauteils und einem Getriebealter oder den Verlauf eines Übertragungsfehlers in Abhängigkeit von einem Eingangswinkel und der Getriebebetriebszeit oder den Verlauf eines Übertragungsfehlers in Abhängigkeit von einem Eingangswinkel eines Getriebeantriebsbauteils und einer Getriebelaufleistung betrifft. Die Berücksichtigung wenigstens einer dieser Zuordnungen wirkt sich ganz besonders vorteilhaft auf die Positioniergenauigkeit und die Wiederholgenauigkeit aus, da der Getriebeverschließ beim Steuern des Roboters kompensiert wird.

Hinsichtlich der zu berücksichtigenden Zuordnungen gibt es keine grundsätzlichen Beschränkungen. Insbesondere kann eine der Getriebegrößen einer zu berücksichtigenden Zuordnung einen Drehwinkel oder einen Winkelfehler oder einen Abstandsfehler oder einen Übertragungsfehler oder eine Getriebebelastung oder ein Getriebealter oder eine Getriebebetriebszeit oder eine Getriebelaufleistung eine Drehzahl, insbesondere eine Antriebsdrehzahl oder eine Abtriebsdrehzahl, oder einen Wirkungsgrad oder ein Getriebespiel oder eine Getriebetemperatur oder einen Übertragungsfehler betreffen. Eine Getriebegröße ist insbesondere eine an dem Getriebe quantitativ bestimmbare Eigenschaft eines Vorgangs oder Zustands.

Bei einer ganz besonders Vorteilhaften Ausführung betrifft die wenigstens eine Zuordnung zwischen wenigstens zwei Mengen von Getriebegrößen von der Getriebetemperatur verschiedene Getriebegrößen. Es wurde nämlich erkannt, dass die Berücksichtigung der Getriebetemperatur (im Gegensatz zur Berücksichtigung von Zuordnungen anderer Getriebegrößen) in der Praxis nur wenig zur Verbesserung der Positioniergenauigkeit und/oder der Wiederholgenauigkeit des Roboters beiträgt und dass außerdem eine exakte Messung der Getriebetemperatur in der Praxis oftmals nur mit hohem Aufwand realisierbar ist. Allerdings ist die Berücksichtigung der Getriebetemperatur im Rahmen der wenigstens eine Zuordnung nicht grundsätzlich ausgeschlossen.

Die Zuordnung kann beispielsweise in Form einer Nachschlagetabelle berücksichtigt werden. Die Nachschlagetabelle kann in einem Speicher der Steuerungsvorrichtung abgelegt sein. Alternativ oder zusätzlich ist es auch möglich, dass die Zuordnung in Form einer Funktionsgleichung berücksichtigt wird. Bei dieser Ausführung kann die Steuerungsvorrichtung die relevante Getriebegröße bzw. die relevanten Getriebegrößen der Zuordnung individuell errechnen.

Bei einer besonders präzisen Ausführung wird wenigstens eine der Getriebegrößen der Zuordnung an genau dem Getriebe des zu steuernden Roboters gemessen. Insbesondere kann vorteilhaft vorgesehen sein, dass die Getriebegrößen wenigsten einer der Mengen der Zuordnung an genau dem Getriebe des zu steuernden Roboters direkt oder indirekt gemessen werden.

Alternativ ist es jedoch auch möglich, dass die Getriebegrößen wenigsten einer der Mengen der Zuordnung an einem zu dem Getriebe des zu steuernden Roboters gleichen Getriebe gemessen werden. Insbesondere können die Messungen an einem Stichprobengetriebe einer Produktionsserie von gleichen Getrieben durchgeführt werden. Eine solche Zuordnung führt jedoch zu etwas weniger präzisen Ergebnissen, insbesondere in Bezug auf die Positioniergenauigkeit und die Wiederholgenauigkeit des Roboters. Diese Ausführung hat jedoch den Vorteil, dass eine verbesserte Positioniergenauigkeit und die Wiederholgenauigkeit des Roboters erreichbar ist, ohne dass an den Getrieben dieses Roboters eigene Messungen durchgeführt werden müssen.

Im Hinblick auf die Positioniergenauigkeit und die Wiederholgenauigkeit etwas verbessert ist eine Ausführung, bei der die Getriebegrößen wenigsten einer der Mengen der Zuordnung durch Verrechnen, insbesondere durch eine Mittelwertbildung, aus Messwerten von Getrieben ermittelt werden, die zu dem Getriebe des zu steuernden Roboters gleich sind. Auch diese Ausführung hat den Vorteil, dass eine verbesserte Positioniergenauigkeit und die Wiederholgenauigkeit des Roboters erreichbar ist, ohne dass an den Getrieben dieses Roboters eigene Messungen durchgeführt werden müssen.

Bei einer ganz besonders vorteilhaften Ausführung werden Sensordaten des Roboters bei der Berücksichtigung der Zuordnung bzw. der Zuordnungen verwendet. Beispielsweise kann das Getriebe oder das Gelenk, zu dem das Getriebe gehört, oder der Roboter vorteilhaft einen Temperatursensor aufweisen, dessen Temperaturmesswerte bei der Berücksichtigung der Zuordnung verwendet werden. Hierfür kann die die Zuordnung beispielsweise den Getriebewirkungsgrad in Abhängigkeit von einer Getriebetemperatur betreffen. Die Steuerungsvorrichtung ermittelt auf der Basis des gemessenen Temperaturmesswerts und der Zuordnung den aktuell zu berücksichtigenden Getriebewirkungsgrad und berücksichtigt diesen beim Steuern der Bewegung des Roboters.

Besonders vorteilhaft ist ein mehrachsiger Roboter, der mehrere Getriebe aufweist, mit einer erfindungsgemäßen Steuerungsvorrichtung. Der Roboter kann insbesondere derart ausgebildet sein, dass jede Roboterachse wenigsten eines der Getriebe aufweist. Insbesondere kann jede Roboterachse einen Antriebsmotor aufweisen, der das Getriebe der Roboterachse antreibt.

Hinsichtlich der Art des Getriebes gibt es keine grundsätzlichen Beschränkungen. Insbesondere kann wenigstens eines der Getriebe ein Zykloidgetriebe oder ein Spannungswellengetriebe oder ein Planetengetriebe oder ein Planetengetriebe mit konischer Verzahnung sein.

Hinsichtlich der Ausbildung des mehrachsigen Roboters und hinsichtlich der Verwendung des mehrachsigen Roboters gibt es keine grundsätzlichen Beschränkungen. Der Roboter kann insbesondere als Industrieroboter ausgebildet sein.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein schematisches Ausführungsbeispiel eines erfindungsgemäßen, mehrachsigen Roboters,
- Fig. 2 bis 4: Darstellungen zur Illustration der Positioniergenauigkeit und Wiederholgenauigkeit,
- Fig. 5: eine grafische Darstellung eines Ausführungsbeispiels einer erfindungsgemäß berücksichtigbaren Zuordnung,
- Fig. 6: eine Detailansicht eines Ausführungsbeispiels eines Torsionsgelenks eines erfindungsgemäßen Roboters,
- Fig. 7: eine Detailansicht eines Ausführungsbeispiels eines Revolvergelenks eines erfindungsgemäßen Roboters,
- Fig. 8: eine grafische Darstellung eines anderen Ausführungsbeispiels einer erfindungsgemäß berücksichtigbaren Zuordnung,
- Fig. 9: eine grafische Darstellung eines weiteren Ausführungsbeispiels einer erfindungsgemäß berücksichtigbaren Zuordnung.

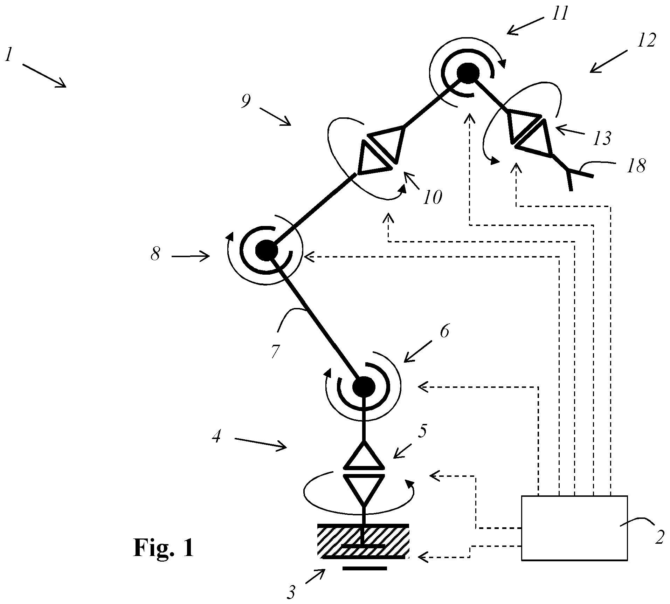

Fig. 1 zeigt ganz schematisch ein Ausführungsbeispiel eines erfindungsgemäßen, mehrachsigen Roboters 1 mit einer Steuerungsvorrichtung 2. Der Roboter 1 weist einen Roboterarm mit insgesamt sieben Gelenken 3, 5, 6, 8, 10, 11, 13 und einem Effektor 30, beispielsweise einem Greifer oder einem Werkzeug, an seinem freien Ende auf.

Der Roboter 1 weist ein erstes Gelenk 3 auf, das als Translationsgelenk ausgebildet ist. Das erste Gelenk 3 ist über ein erstes Trägerglied 4, welches ein zweites Gelenk 5 aufweist, mit einem dritten Gelenk 6 verbunden. Das zweite Gelenk 5 ist als Torsionsgelenk ausgebildet. Das dritte Gelenk 6 ist als Revolvergelenk ausgebildet. Das dritte Gelenk 6 ist über ein zweites Trägerglied 7 mit einem vierten Gelenk 8 verbunden, welches als Revolvergelenk ausgebildet ist. Das vierte Gelenk 8 ist über ein drittes Trägerglied 9, welches ein fünftes Gelenk 10 beinhaltet, mit einem sechsten Gelenk 11 verbunden. Das fünfte Gelenk 10 ist als Torsionsgelenk ausgebildet. Das sechste Gelenk 11 ist als Revolvergelenk ausgebildet. Das sechste Gelenk 11 ist über ein viertes Trägerglied 12, welches ein siebtes Gelenk 13 beinhaltet, mit dem Effektor 30 verbunden. Das siebte Gelenk 13 ist als Torsionsgelenk ausgebildet.

Jedes der Gelenke 3, 5, 6, 8, 10, 11, 13 des Roboters 1 weist einen Antriebsmotor und ein Getriebe auf, wobei jeweils der Abtrieb des Antriebsmotors triebtechnisch mit dem Antrieb des Getriebes verbunden ist. Der besseren Übersichtlichkeit halber sind die Antriebsmotore und die Getriebe nicht eingezeichnet.

Die Steuerungsvorrichtung 2 steuert die (nicht dargestellten) Antriebsmotore des Roboters 1 und damit die Bewegung der Trägerglieder 4, 7, 9, 12 und des Effektors 30. Hierbei berücksichtigt die Steuerungsvorrichtung 2 wenigstens eine Zuordnung zwischen wenigstens zwei Mengen von Getriebegrößen wenigstens eines der (nicht dargestellten) Getriebe. Vorzugsweise berücksichtigt die Steuerungsvorrichtung 2 in Bezug auf jedes der Getriebe wenigstens eine Zuordnung zwischen wenigstens zwei Mengen von Getriebegrößen des jeweiligen Getriebes.

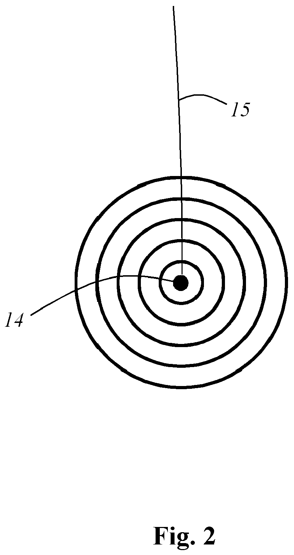

Bei der Steuerung des Roboters 1 wird angestrebt, dass die Bewegungsbahn des Greifers 3 möglichst präzise und wiederholbar einer vorgegebenen Sollbewegungsbahn 15 entspricht. Hierzu gehört insbesondere auch, dass ein Zielpunkt 14 im Raum, der das Ende einer vorgegebenen Sollbewegungsbahn 15 darstellen kann, möglichst präzise angefahren werden kann, was ganz schematisch in Figur 2 illustriert ist. In Figur 2 ist zur Illustration schematisch eine Zielscheibe eingezeichnet. Der Zielpunkt 14 befindet sich im Zentrum der Zielscheibe.

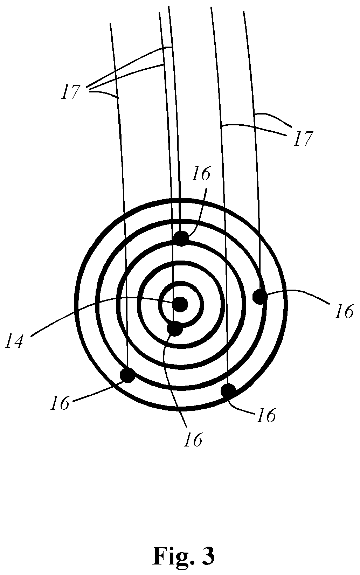

Figur 3 zeigt schematisch das Ergebnis bei einem herkömmlichen Roboter ohne eine erfindungsgemäße Steuerungsvorrichtung 2, wenn der Zielpunkt 14 wiederholt nacheinander angefahren wird. Es ist zu erkennen, dass die einzelnen Anhaltepunkte 16 jeweils am Ende einer Bewegungsbahn 17 mit großem Abstand von dem Zielpunkt 14 beabstandet sind. Insoweit liegt eine geringe Positioniergenauigkeit vor. Darüber hinaus ist in Figur 3 zu sehen, dass die einzelnen Anhaltepunkte 16 verstreut um den Zielpunkt 14 herum angeordnet sind. Insoweit ist auch die Wiederholgenauigkeit sehr gering.

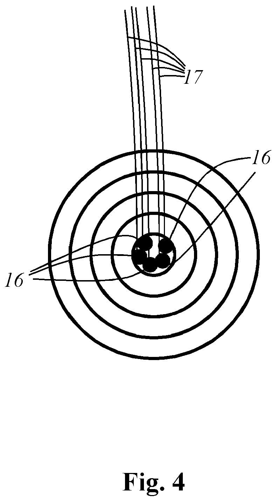

Figur 4 zeigt schematisch das Ergebnis bei einem erfindungsgemäßen Roboter 1 mit einer erfindungsgemäßen Steuerungsvorrichtung 2. Es ist zu erkennen, dass sämtliche Anhaltepunkte 16 sehr nahe an dem Zentrum der Zielscheibe und damit nahe dem (in dieser Figur der besseren Übersichtlichkeit halber nicht eingezeichneten) Zielpunkt 14 angeordnet sind. Dies bedeutet, dass sowohl eine hohe Positioniergenauigkeit, als auch eine hohe Wiederholgenauigkeit erreicht wird.

Wie bereits erwähnt, berücksichtigt die Steuerungsvorrichtung 2 beim Steuern der Bewegung des Roboters 1 wenigstens eine Zuordnung zwischen wenigstens zwei Mengen von Getriebegrößen wenigstens eines der Getriebe. Vorzugsweise berücksichtigt die Steuerungsvorrichtung 2 hierbei bei der Steuerung des Antriebsmotors jedes einzelnen der Gelenke 3, 5, 6, 8, 10, 11, 13 jeweils eine Zuordnung zwischen wenigstens zwei Mengen von Getriebegrößen des jeweiligen Getriebes.

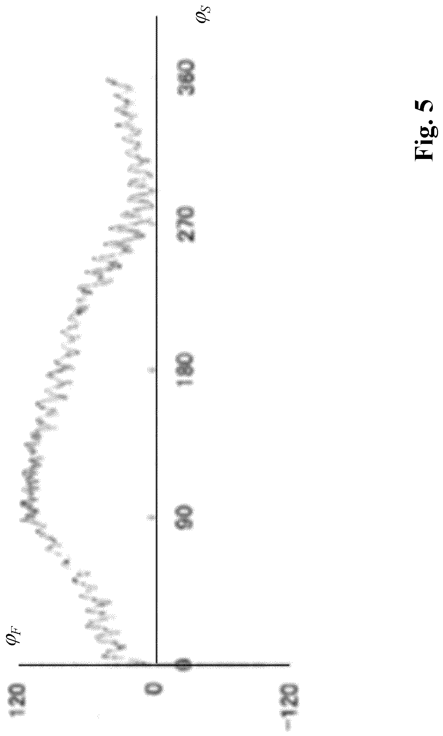

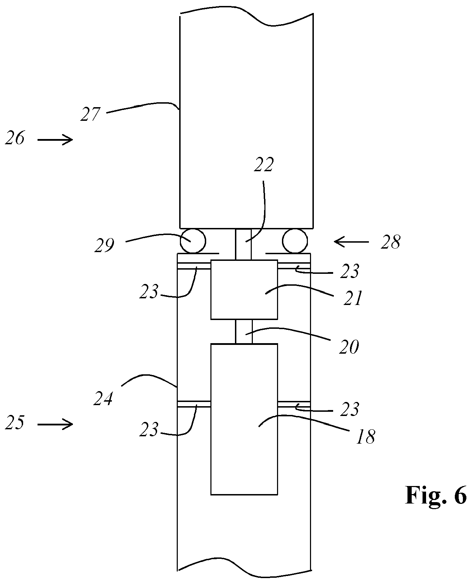

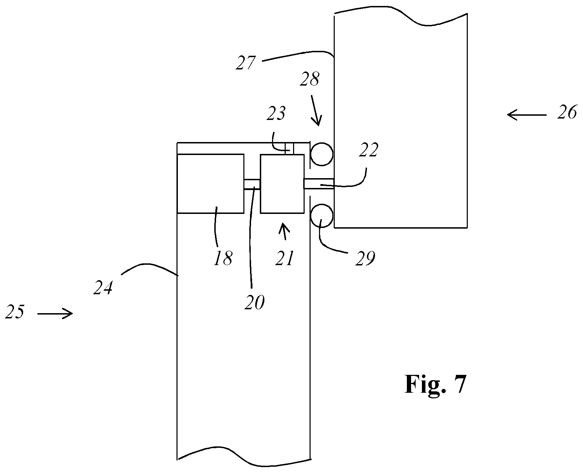

Beispielsweise kann vorteilhaft vorgesehen sein, dass die in Figur 5 dargestellte Zuordnung von Getriebegrößen bei der Ansteuerung eines Antriebsmotors 18 eines Rotationsgelenks 19 berücksichtigt wird, der über einen Getriebeantrieb 20 ein Getriebe 21, insbesondre ein Zykloidgetriebe oder ein Planetengetriebe oder ein Spannungswellengetriebe, des Rotationsgelenks 19 antreibt. Die in Figur 5 dargestellte Zuordnung betrifft einerseits den Solldrehwinkel ϕ_{S} des Getriebeabtriebs 22 relativ zu einer Getriebeabstützung 23, wobei die Getriebeabstützung 23 beispielsweise mit einem Gehäuse 24 eines ersten Trägergliedabschnitts 25 des Roboters 1 drehfest verbunden sein kann, während der Getriebeabtrieb 22 mit einem anderen, relativ zu dem ersten Träger rotierbar angeordneten zweiten Trägergliedabschnitt 26, insbesondere mit einem Gehäuse 27 des zweiten Trägergliedabschnitt 26, Träger verbunden sein kann, wie dies ganz schematisch und beispielhaft in Figur 6 (Ausführungsbeispiel eines Torsionsgelenks) und Figur 7 (Ausführungsbeispiel eines Revolvergelenks) dargestellt ist. Zwischen den Gehäusen 24, 27 kann ein Wälzlager 28 mit Wälzkörpern 29 angeordnet sein.

Der tatsächliche Drehwinkel des Getriebeabtriebs 22 stimmt aufgrund von unvermeidbaren Ungenauigkeiten in dem Getriebe 21 zumeist nicht genau mit dem Solldrehwinkel ϕ_{S} überein. Vielmehr gibt es einen Winkelfehler ϕ_{F}, der in Figur 5 auf der Y-Achse in Winkelsekunden aufgetragen ist. Es ist zu erkennen, dass der Winkelfehler ϕ_{F} von dem Solldrehwinkel ϕ_{S} abhängig ist. Insbesondere ist zu erkennen, dass der Winkelfehler ϕ_{F} nicht lediglich ein konstanter Bruchteil des jeweiligen Solldrehwinkels ϕ_{F} ist. Da die Steuerungsvorrichtung 2 jedoch spezifisch je nach aktuellem Solldrehwinkel ϕ_{S} den hierbei auftretenden Winkelfehler ϕ_{F} berücksichtigt, kann eine sehr deutlich erhöhte Positioniergenauigkeit und Wiederholgenauigkeit erreicht werden. Dies erzielt die Steuerungsvorrichtung 2 dadurch, dass sie den Antriebsmotor 18 derart steuert, dass der Getriebeantrieb 20 entsprechend dem Übersetzungsverhältnis des Getriebes 21 etwas mehr beziehungsweise etwas weniger gedreht wird, als dies ohne Berücksichtigung des Winkelfehlers ϕ_{F} der Fall wäre. Da eine Berücksichtigung der jeweils relevanten Zuordnungen vorzugsweise bei sämtlichen Getrieben 21 des Roboters 1 erfolgt, wird insgesamt eine erhöhte Positioniergenauigkeit und eine erhöhte Wiederholgenauigkeit des gesamten Roboters 1 erreicht.

Bei einer besonderen (nicht dargestellten) Ausführung kann vorteilhaft vorgesehen sein, dass die Steuerungsvorrichtung 2 eine Vielzahl der in Figur 5 dargestellten Zuordnungen bei der Steuerung eines Antriebsmotors 18 des Roboters 1 berücksichtigt, wobei sich jede der Zuordnungen auf eine andere Drehmomentbelastung des Getriebes 21 bezieht. Bei einer solchen Ausführung wird zusätzlich berücksichtigt, dass der Winkelfehler ϕ_{F} zusätzlich auch drehmomentabhängig ist, so dass im Ergebnis eine dreidimensionale Zuordnung berücksichtigt wird.

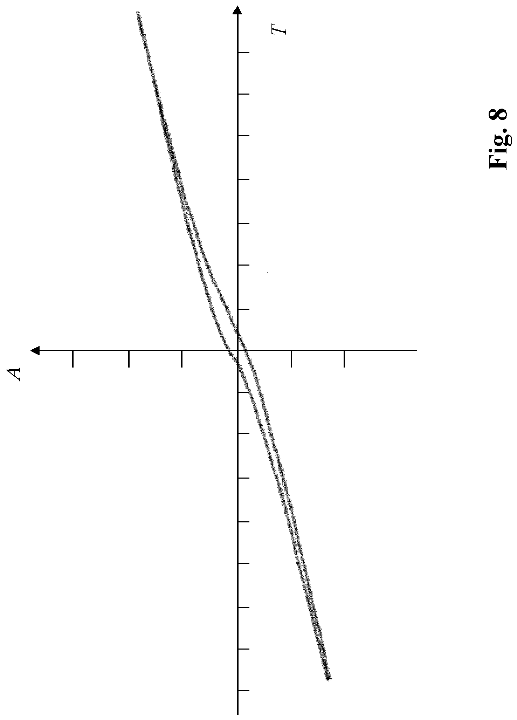

Figur 8 zeigt eine weitere Zuordnung, die alleine oder in Kombination mit wenigstens einerweiteren Zuordnung von einer Steuerungsvorrichtung 2 bei der Steuerung der Bewegung eines Roboters 1 vorteilhaft berücksichtigt werden kann. Die Zuordnung charakterisiert die Steifigkeit des verwendeten Getriebes 21 und beinhaltet als erste Menge von Getriebegrößen die Getriebebelastung (Drehmoment T; aufgetragen auf der X-Achse) und als zweite Größe die mit zunehmender Getriebebelastung am Getriebeabtrieb zunehmende Abweichung A, beispielsweise der Winkelabweichung des Getriebeabtriebs 22, von einem Vorgabewert bei unbelastetem Getriebe 21. Es ist zu erkennen, dass die Abweichung A bei zunehmender Belastung des Getriebes 21 einen anderen Verlauf aufweist, als bei zunehmender Entlastung des Getriebes 21. Im Ergebnis entsteht eine Hysterese, die die Steuerungsvorrichtung 2 beim Steuern der Bewegung des Roboters 1 berücksichtigt. Da bei der konkreten Programmierung der Sollbewegungsbahn 15 in aller Regel die jeweiligen Belastungszustände und/oder die, insbesondere ortsabhängigen und/oder zeitabhängigen, Belastungsverläufe bekannt sind, kann die Steuerungsvorrichtung 2 anhand der in Figur 8 dargestellten Zuordnung entsprechende Korrekturen bei Steuern des jeweiligen Antriebsmotors 18 vornehmen.

Bei einem ganz besonders vorteilhaften Roboter 1 kann beispielsweise vorgesehen sein, dass die Steuerungsvorrichtung 2 die in Abbildung 5 dargestellte Zuordnung berücksichtigt und zusätzlich je nach Drehmomentbelastung T des Getriebes 21 eine weitere Korrektur auf der Basis der in Figur 8 dargestellten Zuordnung vornimmt. Beispielsweise kann dies derart realisiert sein, dass die Steuerungsvorrichtung 2 zunächst unter Berücksichtigung der in Figur 5 dargestellten Zuordnung einen Korrekturwert für die Ansteuerung des Antriebsmotors 18 ermittelt und diesen Korrekturwert unter Berücksichtigung der jeweiligen Belastung mit einem Faktor multipliziert, der sich für den relevanten Belastungsfall aus der in Figur 8 dargestellten Zuordnung ergibt.

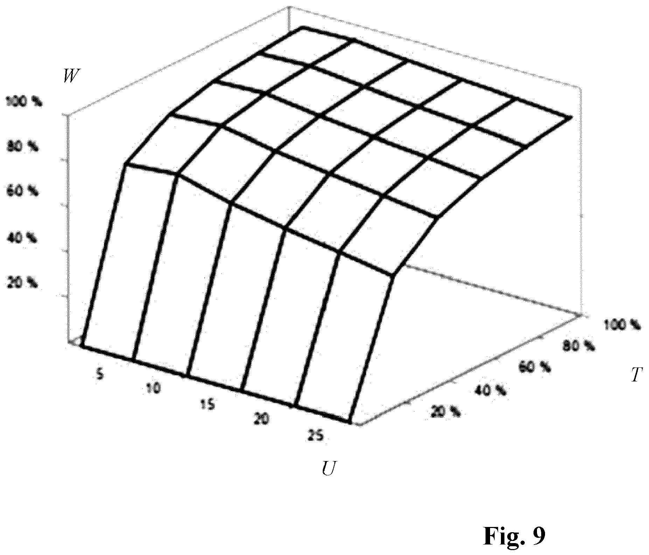

Figur 9 zeigt eine weitere Zuordnung, die insbesondere die Reibung innerhalb des Getriebes 21 betrifft. Die Berücksichtigung dieser Zuordnung ermöglicht es insbesondere, Positionierungsungenauigkeiten und Wiederholungenauigkeiten zu verringern, die auf die Innere Reibung des Getriebes 21 zurückzuführen sind. Die innere Reibung des Getriebes 212 spiegelt sich insbesondere in dem Wirkungsgrad W (in Figur 9 aufgetragen auf der Z-Achse) wieder, die ganz wesentlich von der jeweiligen Getriebedrehzahl U (aufgetragen auf der X-Achse, beispielsweise in Umdrehungen/Minute) und von dem wirkenden Drehmoment T (aufgetragen auf der Y-Achse in Prozentangaben vom Nenndrehmoment des Getriebes) abhängig ist. Die Steuerungsvorrichtung 2 kann die Zuordnung beispielsweise beim Anfahren eines Zielpunktes 14 in der Weise berücksichtigen, dass der Antriebsmotor 18 etwas länger aktiv bleibt um zu kompensieren, dass das Getriebe 21 aufgrund einer hohen inneren Reibung bei der aktuell vorliegenden Drehzahl U und dem aktuell vorliegenden Drehmoment T bereits zum Stillstand kommen würde, bevor der Zielpunkt 14 erreicht wird. Umgekehrt kann die Steuerungsvorrichtung 2 die Zuordnung beispielsweise beim Anfahren eines Zielpunktes 14 auch in der Weise berücksichtigen, dass der Antriebsmotor 18 etwas kürzer aktiv bleibt um zu kompensieren, dass das Getriebe 21 aufgrund einer bei der relevanten Drehzahl U und dem relevanten Drehmoment T geringeren inneren Reibung erst zum Stillstand kommen würde, nachdem der Zielpunkt 14 erreicht wurde.

### Bezugszeichenliste:

- 1: Roboter
- 2: Steuerungsvorrichtung
- 3: erstes Gelenk
- 4: erstes Trägerglied
- 5: zweites Gelenk
- 6: drittes Gelenk
- 7: zweites Trägerglied
- 8: viertes Gelenk
- 9: drittes Trägerglied
- 10: fünftes Gelenk
- 11: sechstes Gelenk
- 12: viertes Tragglied
- 13: siebtes Gelenk
- 14: Zielpunkt
- 15: Sollbewegungsbahn
- 16: Anhaltepunkt
- 17: Bewegungsbahn
- 18: Antriebsmotor
- 19: Rotationsgelenk
- 20: Getriebeantrieb
- 21: Getriebe
- 22: Getriebeabtrieb
- 23: Getriebeabstützung
- 24: Gehäuse
- 25: erster Trägergliedabschnitt
- 26: zweiter Trägergliedabschnitt
- 27: Gehäuse
- 28: Wälzlager
- 29: Wälzkörper
- 30: Effektor

## Patentansprüche

1. Verfahren zum Steuern einer Bewegung eines mehrachsigen Roboters, der mehrere Getriebe aufweist, **dadurch gekennzeichnet, dass** wenigstens eine Zuordnung zwischen wenigstens zwei Mengen von Getriebegrößen wenigstens eines der Getriebe berücksichtigt wird.

2. Verfahren nach Anspruch 1, **dadurch gekennzeichnet, dass**
a. jeweils wenigstens eine Zuordnung zwischen wenigstens zwei Mengen von Getriebegrößen jedes der Getriebe berücksichtigt wird, oder dass
b. jeweils wenigstens eine Zuordnung zwischen wenigstens zwei Mengen von Getriebegrößen jedes der Getriebe berücksichtigt wird, wobei sich die Getriebegrößen innerhalb einer zu der Zuordnung gehörenden Menge voneinander unterscheiden.

3. Verfahren nach Anspruch 1 oder 2, **dadurch gekennzeichnet, dass** die Zuordnung wenigstens einen der folgenden Zuordnungsaspekte betrifft:
a. den Verlauf eines Übertragungsfehlers in Abhängigkeit von einem Eingangswinkel eines Getriebeantriebsbauteils,
b. den Verlauf einer Relativstellung eines Getriebeantriebsbauteils zu einem Getriebeabtriebsbauteil in Abhängigkeit von einer Getriebebelastung,
c. den Getriebewirkungsgrad in Abhängigkeit von einem Drehmoment, insbesondere einem Antriebsdrehmoment oder einem Abtriebsdrehmoment,
d. den Getriebewirkungsgrad in Abhängigkeit von einer Drehzahl, insbesondere einer Antriebsdrehzahl oder einer Abtriebsdrehzahl,
e. den Getriebewirkungsgrad in Abhängigkeit von einem Drehmoment, insbesondere einem Antriebsdrehmoment oder einem Abtriebsdrehmoment, und einer Drehzahl, insbesondere einer Antriebsdrehzahl oder einer Abtriebsdrehzahl,
f. den Getriebewirkungsgrad in Abhängigkeit von einer Getriebetemperatur,
g. den Getriebewirkungsgrad in Abhängigkeit von einer Getriebebelastung,
h. ein Getriebespiel in Abhängigkeit von einem Getriebealter oder einer Getriebebetriebszeit oder einer Getriebelaufleistung,
i. den Verlauf eines Übertragungsfehlers in Abhängigkeit von einem Eingangswinkel eines Getriebeantriebsbauteils und einem Getriebealter,
j. den Verlauf eines Übertragungsfehlers in Abhängigkeit von einem Eingangswinkel und der Getriebebetriebszeit,
k. den Verlauf eines Übertragungsfehlers in Abhängigkeit von einem Eingangswinkel eines Getriebeantriebsbauteils und einer Getriebelaufleistung.

4. Verfahren nach einem der Ansprüche 1 bis 3, **dadurch gekennzeichnet, dass** wenigstens eine der Getriebegrößen einen Drehwinkel oder einen Winkelfehler oder einen Abstandsfehler oder einen Übertragungsfehler oder eine Getriebebelastung oder ein Getriebealter oder eine Getriebebetriebszeit oder eine Getriebelaufleistung eine Drehzahl, insbesondere eine Antriebsdrehzahl oder eine Abtriebsdrehzahl, oder einen Wirkungsgrad oder ein Getriebespiel oder eine Getriebetemperatur oder einen Übertragungsfehler betrifft.

5. Verfahren nach einem der Ansprüche 1 bis 4, **dadurch gekennzeichnet, dass**
a. die Zuordnung in Form einer Nachschlagetabelle berücksichtigt wird, oder dass
b. die Zuordnung in Form einer Funktionsgleichung berücksichtigt wird.

6. Verfahren nach einem der Ansprüche 1 bis 5, **dadurch gekennzeichnet, dass**
a. wenigstens eine der Getriebegrößen der Zuordnung an genau dem Getriebe des zu steuernden Roboters gemessen wird und/oder dass die Getriebegrößen wenigsten einer der Mengen der Zuordnung an genau dem Getriebe des zu steuernden Roboters direkt oder indirekt gemessen werden, oder dass
b. die Getriebegrößen wenigsten einer der Mengen der Zuordnung an einem zu dem Getriebe des zu steuernden Roboters gleichen Getriebe gemessen werden oder dass
c. die Getriebegrößen wenigsten einer der Mengen der Zuordnung durch Verrechnen, insbesondere durch eine Mittelwertbildung, aus Messwerten von Getrieben ermittelt werden, die zu dem Getriebe des zu steuernden Roboters gleich sind.

7. Steuerungsvorrichtung zum Steuern einer Bewegung eines mehrachsigen Roboters, **dadurch gekennzeichnet, dass** die Steuerungsvorrichtung beim Steuern einer Bewegung des Roboters wenigstens eine Zuordnung zwischen wenigstens zwei Mengen von Getriebegrößen wenigstens eines der Getriebe berücksichtigt.

8. Steuerungsvorrichtung nach Anspruch 7, **dadurch gekennzeichnet, dass**
a. die Steuerungsvorrichtung wenigstens eine Zuordnung zwischen wenigstens zwei Mengen von Getriebegrößen jedes der Getriebe berücksichtigt, oder dass
b. die Steuerungsvorrichtung wenigstens eine Zuordnung zwischen wenigstens zwei Mengen von Getriebegrößen jedes der Getriebe berücksichtigt, wobei sich die Getriebegrößen innerhalb einer zu der Zuordnung gehörenden Menge voneinander unterscheiden.

9. Steuerungsvorrichtung nach Anspruch 7 oder 8, **dadurch gekennzeichnet, dass** die Zuordnung wenigstens einen der folgenden Zuordnungsaspekte:
a. den Verlauf eines Übertragungsfehlers in Abhängigkeit von einem Eingangswinkel eines Getriebeantriebsbauteils,
b. den Verlauf einer Relativstellung eines Getriebeantriebsbauteils zu einem Getriebeabtriebsbauteil in Abhängigkeit von einer Getriebebelastung,
c. den Getriebewirkungsgrad in Abhängigkeit von einem Drehmoment, insbesondere einem Antriebsdrehmoment oder einem Abtriebsdrehmoment,
d. den Getriebewirkungsgrad in Abhängigkeit von einer Drehzahl, insbesondere einer Antriebsdrehzahl oder einer Abtriebsdrehzahl,
e. den Getriebewirkungsgrad in Abhängigkeit von einem Drehmoment, insbesondere einem Antriebsdrehmoment oder einem Abtriebsdrehmoment, und einer Drehzahl, insbesondere einer Antriebsdrehzahl oder einer Abtriebsdrehzahl,
f. den Getriebewirkungsgrad in Abhängigkeit von einer Getriebetemperatur,
g. den Getriebewirkungsgrad in Abhängigkeit von einer Getriebebelastung,
h. ein Getriebespiel in Abhängigkeit von einem Getriebealter oder einer Getriebebetriebszeit oder einer Getriebelaufleistung,
i. den Verlauf eines Übertragungsfehlers in Abhängigkeit von einem Eingangswinkel eines Getriebeantriebsbauteils und einem Getriebealter,
j. den Verlauf eines Übertragungsfehlers in Abhängigkeit von einem Eingangswinkel und der Getriebebetriebszeit,
k. den Verlauf eines Übertragungsfehlers in Abhängigkeit von einem Eingangswinkel eines Getriebeantriebsbauteils und einer Getriebelaufleistung.

10. Steuerungsvorrichtung nach einem der Ansprüche 7 bis 9, **dadurch gekennzeichnet, dass** wenigstens eine der Getriebegrößen einen Drehwinkel oder einen Winkelfehler oder einen Abstandsfehler oder einen Übertragungsfehler oder eine Getriebebelastung oder ein Getriebealter oder eine Getriebebetriebszeit oder eine Getriebelaufleistung eine Drehzahl, insbesondere eine Antriebsdrehzahl oder eine Abtriebsdrehzahl, oder einen Wirkungsgrad oder ein Getriebespiel oder eine Getriebetemperatur oder einen Übertragungsfehler betrifft.

11. Steuerungsvorrichtung nach einem der Ansprüche 7 bis 10, **dadurch gekennzeichnet, dass**
a. die Steuerungsvorrichtung die Zuordnung in Form einer Nachschlagetabelle berücksichtigt und/oder dass die Zuordnung in Form einer Nachschlagetabelle in einem Speicher der Steuerungsvorrichtung abgelegt ist, oder dass
b. die Steuerungsvorrichtung die Zuordnung in Form einer Funktionsgleichung berücksichtigt.

12. Steuerungsvorrichtung nach einem der Ansprüche 7 bis 11, **dadurch gekennzeichnet, dass**
a. wenigstens eine der Getriebegrößen der Zuordnung an genau dem Getriebe des zu steuernden Roboters gemessen wurde und/oder dass die Getriebegrößen wenigsten einer der Mengen der Zuordnung an genau dem Getriebe des zu steuernden Roboters direkt oder indirekt gemessen wurden, oder dass
b. die Getriebegrößen wenigsten einer der Mengen der Zuordnung an einem zu dem Getriebe des zu steuernden Roboters gleichen Getriebe gemessen wurde oder dass
c. die Getriebegrößen wenigsten einer der Mengen der Zuordnung durch Verrechnen, insbesondere durch eine Mittelwertbildung, aus Messwerten von Getrieben ermittelt wurden, die zu dem Getriebe des zu steuernden Roboters gleich sind.

13. Mehrachsiger Roboter, der mehrere Getriebe aufweist, mit einer Steuerungsvorrichtung nach einem der Ansprüche 7 bis 12.

14. Mehrachsiger Roboter nach Anspruch 13, **dadurch gekennzeichnet, dass**
a. jede Roboterachse wenigsten eines der Getriebe aufweist, oder dass
b. jede Roboterachse wenigsten eines der Getriebe und jeweils einen Antriebsmotor aufweist, der das Getriebe der Roboterachse antreibt.

15. Mehrachsiger Roboter, insbesondere Industrieroboter, nach einem der Ansprüche 13 oder 14, **dadurch gekennzeichnet, dass** wenigstens eines der Getriebe ein Zykloidgetriebe oder ein Spannungswellengetriebe oder ein Planetengetriebe oder ein Planetengetriebe mit konischer Verzahnung ist.
